# EUROPEAN PATENT SPECIFICATION

(11) **EP 3 022 068 B1**
(45) Date of publication and mention of the grant of the patent: **18.03.2020**
(21) Application number: 14747508.1
(22) Date of filing: 14.07.2014
(51) Int. Cl.: B60C 7/14, B60C 7/18, B60C 7/20

(54) **A TYRE WITH ADJUSTABLE PROPERTIES**
REIFEN MIT ANPASSBAREN EIGENSCHAFTEN
PNEU A CARACTERISTIQUES ADAPTABLES

(30) Priority: 17.07.2013 CZ 20130574
(43) Date of publication of application: 25.05.2016
(73) Proprietor: CVUT V Praze, Fakulta Strojní, 166 07 Praha 6 (CZ); Studio Silfor s.r.o., 10100 Praha 10 (CZ); Valásek, Michael, 14300 Praha 4 (CZ); Kovár, Josef, 10100 Praha 10 (CZ)
(72) Inventor: VALÁSEK, Michael, 14300 Praha 4 (CZ); KOVÁR , Josef, 10100 Praha 10 (CZ)
(74) Representative: Novotny, Karel
(86) International application number: PCT/CZ2014/000081
(87) International publication number: WO 2015/007253

(56) References cited:
- EP-A2- 0 247 948
- WO-A1-2012/153170
- DE-C- 347 443
- DE-C- 945 812
- FR-A1- 2 898 077
- US-A- 1 647 455
- US-A- 1 710 215

## Description

### Technical Field

The invention concerns the pneumatic tyre with adjustable properties, especially for motor vehicles, comprising a wheel rim and a tyre consisting of a tread and tyre side-walls.

### State-of-the-art

Previous solutions of a tyre are mostly based on a traditional tyre solution as a toroidal chamber with overpressure. This basic concept has been modified by various solutions of walls of this chamber (tread, side-walls, edges of a rim et al.) comprising reinforcing elements and combinations of material layers as it is evident for instance in the US document 3089530 or US 2010/0300587. However, there is a lot of suggestions of other modifications, for example divided chambers for resistance against damage for military applications, built-in spoke-based structures for finishing the drive when having a defect, a complete replacement of the chamber tyre with a spoke tyre concept. Further, other additional properties have been investigated as tyre pressure check or inflation. The basic approach to the chamber solution, if inflated overpressure is used, has not been changed. Modifications have been carried out in the chamber walls, not by application of structures inside the chamber. Generally the chamber solution has a problem with very low, virtually neglectable damping and impossibility to direct different rigidity to different desirable directions. Then these properties are often reached by changing a tyre for using a vehicle in different conditions, e.g. the urban or off-road use, summer or winter season, etc.
Modifications of wheels related to tyres have been carried out to reach better driving properties of a vehicle, especially to absorb impacts when driving a vehicle across a sudden obstacle, as evident e.g. in documents WO 2012/153170, WO 03/018332 and FR 2898077, by building-in additional flexible elements between an inner wheel hub and the tyre itself. These solutions are often called non-pneumatic tyre in contradiction to this invention application.

The aim of this invention is to make it possible to enhance properties of a tyre especially for eliminating problems with tyre vibrations shapes and eliminating rippling of the tyre tread and sides to reduce running resistance; it is reached by means of various structural constructions, both passive ones and actively actuator-driven and sensor-controlled ones. These properties could physically solve concepts of controlled vehicle chassis achieved only by controlling the suspension (sky hook, ground hook, etc.) during driving a vehicle in a large variety of road and off-road conditions.

### Subject Matter of the Invention

The subject matter of the pneumatic tyre with adjustable properties, especially for motor vehicles, comprising a wheel rim and a tyre consisting of a tread and tyre side-walls, characterized in that inside the tyre between the rim and the tread and/or the side-walls of the tyre there is/there are a controlled force device/force devices of a type of a controlled absorber or a controlled force actuator for a change of force transmission between the rim and the tyre, formed individually or in combination with controlled force devices of controlled absorber or a controlled force actuator. Force devices of a type of a controlled absorber or a controlled force actuator between a wheel rim and a tyre tread are in a spokewise arrangement, in case of need a force device of a type of a controlled absorber or a controlled force actuator between a wheel rim and a tyre tread comprises a coherent annular controlled absorber or a coherent annular controlled force actuator.
Force devices between a wheel rim and a tyre are arranged spokewise towards them and are connected by means of spherical joints on an annulus. Alternatively, a force device between a rim and a tyre tread comprises a coherent annular membrane spring placed on a wheel rim through a flexible absorbing part. When using more force devices, these are connected by means of spherical joints with a possible arrangement in individual separated sectors.

An advantage of this tyre is its inner adjustable whole-space dynamics with an adjustable characteristics, where the material or the inner space of the tyre is significantly used for absorption, which is given by the fact that absorbing and/or force elements work not only in a phase of contact of the particular part of the tyre with a road (they are downwards from the wheel axis), but also in a phase, when the particular part of the tyre is not in contact with a road (they are upwards from the wheel axis). Owing to elimination of the tyre rippling the rolling resistance decreases in these wheels as well.
The toroid of the tyre can be affected also through elements which go round a wheel disk, for instance a radially loaded membrane.
A synergy of an effect of a casing of a toroidal hollow and absorbing elements inside the tyre moves the absorption frequency to the frequency field of the vehicle kinematics - an axle, a frame.
A conventional tyre as a pressurized toroidal chamber is not able to eliminate operational frequencies all over during driving a vehicle in a large spectrum of road and off-road conditions.

Control of adjustable properties of the tyre is performed by a computer.

### Review of the Figures in the Drawings

In attached figures
1 - 14 there are schematic depictions of particular embodiments of a tyre with adjustable properties as described in the invention and in figures
15 - 17 there are schematic depictions of possible methods of modifications of a tyre for installation of force devices.

### Examples of the Embodiments of the Invention

The described embodiments of a tyre with adjustable properties are always based on an arrangement of controlled force devices 5₁ - 5₆ in a common one-piece space of a tyre.

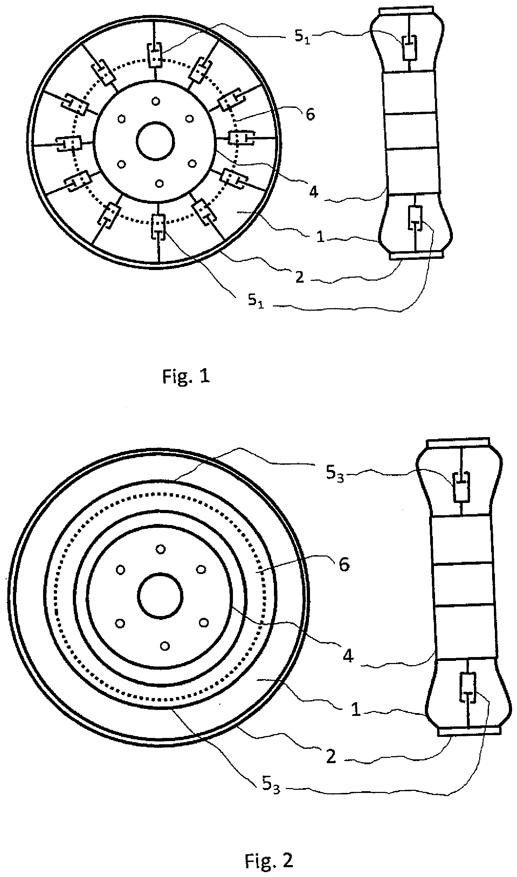

In Fig. 1 there is a depiction of a basic embodiment of a tyre with adjustable properties. These are two combined views in cross-sections, where there is a vehicle wheel consisting of a tyre 1 on a wheel rim 4. This traditional arrangement is complemented with an arrangement of a set of force devices 5₁ of a type of a controlled absorber or a controlled force actuator between the wheel rim 4 and a tread 2 of the tyre 1. The force devices 5₁ are arranged spokewise in an annulus 6. In this case the force devices 5₁ comprise controlled absorbers with an appropriately adjusted characteristic which changes the complex properties of the vehicle suspension. Absorption in these controlled absorbers changes a time behavior of the force transmitted through the tyre between the vehicle and a road. Though, the force device 5₁ can comprise other types of devices which change the force transmission between the tread 2 of the tyre 1, which is in contact with a road, and the wheel rim 4, which transmits the force to the vehicle chassis. This can be a combination of a spring and an controlled absorber or an element with controlled properties or a controlled force actuator. An example can be a set of absorbers with controlled absorbing properties. The control can be realized through magnetic field acting on magnetorheological fluid filled in the controlled absorber or in the force device 5₁, or directly by electrical control voltage acting on the actuator. The control method can be similar to the vehicle chassis suspension control. This is another controlled element in such a system. The force devices 5₁ represent a physical realization of a ground hook concept for the controlled suspension.

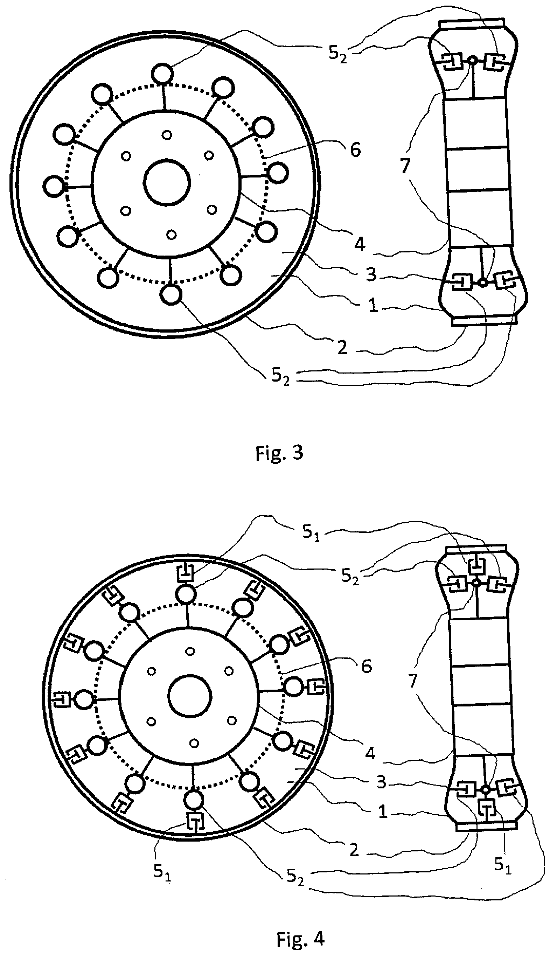

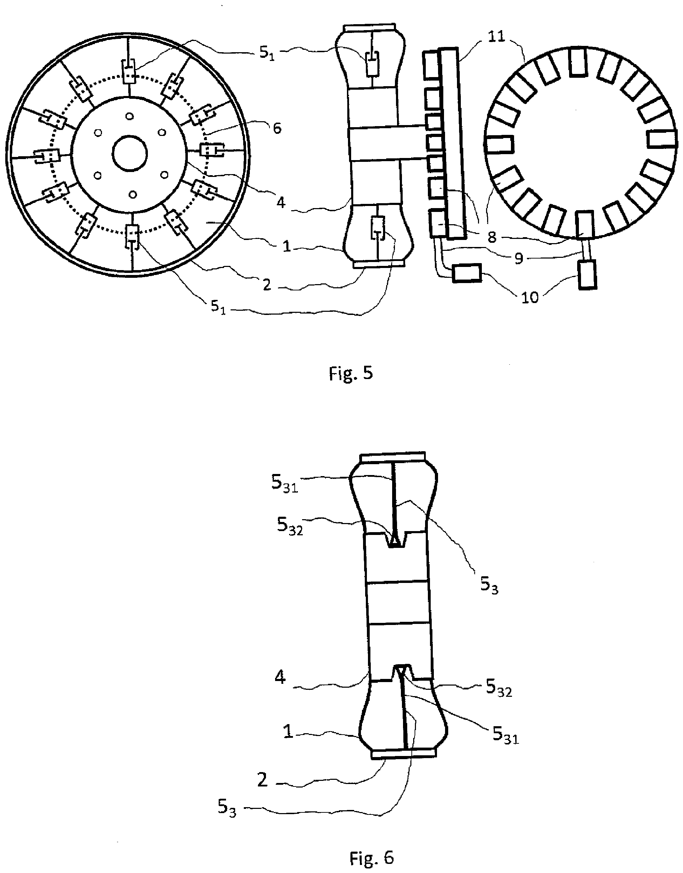

In Fig. 2 there is a depiction of another basic embodiment of a tyre with adjustable properties. These are two combined views in cross-sections, where there is a vehicle wheel consisting of the tyre 1 on the wheel rim 4. This traditional arrangement is complemented with the force device 5₃ comprising a mechanical element arranged coherently in an annulus between the wheel rim 4 and the tread 2 of the tyre 1. In this case the force device 5₃ comprises a coherent annular controlled absorber with an appropriately adjusted characteristic which changes the complex properties of the vehicle suspension. Absorption in these controlled absorbers changes a time behavior of the force transmitted through the tyre between the vehicle and a road. Though, the force device 5₃ can comprise other types of devices which change the force transmission between the tread 2 of the tyre 1, which is in contact with a road, and the wheel rim 4, which transmits the force to the vehicle chassis. This can be again a combination of a spring and an controlled absorber or an element with controlled properties. An example can be filling the coherent annular controlled absorber with magnetorheological fluid the absorbing properties of which are controlled by an external magnetic field, or directly by electrical control voltage acting on the controlled actuator. The control method can be similar to the vehicle chassis suspension control. This is another controlled element in such a system. The force devices 5 represent a physical realization of a ground hook concept for the controlled suspension.
The annulus 6 shown in Figs. 1, 2 and as depicted in Fig. 5 is merely virtual, so an imaginary annulus; in other figures, where it is depicted, thus in Figs. 3, 4, 7, 8, 9, 10, the annulus 6 is formed by a physical component.

In Fig. 3 there is a depiction of another basic embodiment of a tyre with adjustable properties. These are two combined views in cross-sections, where there is a vehicle wheel consisting of the tyre 1 on the wheel rim 4. This traditional arrangement is complemented with an arrangement of a set of force devices 5₂ between the wheel rim 4 and the side-walls 3 of the tyre 1. The force devices 5₂ are arranged spokewise in the annulus 6 on spherical joints 7 between the annulus 6 and the both side-walls 3 of the tyre 1. In this case the force devices 5₂ comprise controlled absorbers with an appropriately adjusted characteristic which changes the complex properties of the vehicle transverse dynamics. Absorption in these controlled absorbers changes a time behavior of the force transmitted through the tyre between the vehicle and a road. Though, the force device 5₂ can comprise other types of devices which change the force transmission between the side-walls 3 and subsequently the tread 2 of the tyre 1, which is in contact with a road, and the wheel rim 4, which transmits the force to the vehicle chassis. This can be a combination of a spring and an absorber or an element with controlled properties. An example can be a set of absorbers with controlled absorbing properties. The control can be realized through magnetic field acting on magnetorheological fluid filled in the controlled absorber, or directly by electrical control voltage acting on the controlled actuator. The control method can be similar to the vehicle chassis transverse dynamics control. Advantageously, when maneuvering a vehicle in various ways, the outer and inner wheels and/or the front or the rear wheels can be controlled in various ways. This is another controlled element in such a system.

In Fig. 4 there is a depiction of a combination of the embodiments of a tyre with adjustable properties depicted in Fig 1 and Fig 3. These are two combined views in cross-sections, where there is a vehicle wheel consisting of the tyre 1 on the wheel rim 4. This traditional arrangement is complemented with an arrangement of a set of force devices, in this case the force devices 5₁ between the wheel rim 4 and the tread 2 of the tyre 1 and the force devices 5₂ between the wheel rim 4 and the side-walls 3 of the tyre 1. The force devices 5₁ and 5₂ are arranged spokewise in the annulus 6 on the spherical joints 7 towards the tread 2 and the both side-walls 3 of the tyre 1. In this case the force devices 5₁ and 5₂ comprise controlled absorbers with an appropriately adjusted characteristic which changes the complex properties of the vehicle suspension and transverse dynamics. Absorption in these absorbers changes a time behavior of the force transmitted through the tyre between the vehicle and a road. Though, the force devices 5₁ and 5₂ can comprise other types of devices which change the force transmission between the tread 2 and indirectly between the side-walls 3 and subsequently the tread 2 of the tyre, which is in contact with a road, and the wheel rim 4, which transmits the force to the vehicle chassis. This can be a combination of a spring and an absorber or an element with controlled properties. An example can be a set of controlled absorbers with controlled absorbing properties. The control can be realized through magnetic field acting on magnetorheological fluid filled in the controlled absorber, or directly by electrical control voltage acting on the controlled actuator. The control method can be similar to the control of the suspension and transverse dynamics of the vehicle chassis, for example understeering or oversteering. This is another controlled element in such a system.

In Fig. 5 there is a depiction of a possible control of magnetorheological fluid in the force devices 5₁ for the embodiment depicted in Fig. 1. These are three combined views in cross-sections, where there is a vehicle wheel consisting of the tyre 1 on the wheel rim 4. This traditional arrangement is complemented with an arrangement of a set of force devices 5₁ between the wheel rim 4 and the tread 2 of the tyre 1. The force devices 5₁ are arranged spokewise in the annulus 6. In this case the force devices 5₁ comprise controlled absorbers containing magnetorheological fluid. Absorption in these absorbers changes a time behavior of the force transmitted through the tyre between the vehicle and a road. The force devices 5₁ comprising controlled absorbers filled with magnetorheological fluid are subjected to magnetic field created by a set of control electromagnets 8 arranged on a similar annulus as the force devices 5₁ and connected by the feeding electric power lines 9 with controlled electric power supply units 10*.* Not all the feeding electric power lines 9 and not all the controlled electric power supply units 10 are depicted in Fig. 5. The control electromagnets 8 are arranged on a wheel body 11 together with power supply. Their controlled magnetic field controls from outside the absorbing properties of the force devices 5₁ moving around.

In Fig. 6 there is a depiction of another basic embodiment of a tyre with adjustable properties. This is a cross-section view, where there is a vehicle wheel consisting of the tyre 1 on the wheel rim 4. This traditional arrangement is complemented with the force device 5₃ comprising a mechanical element arranged coherently in an annulus between the wheel rim 4 and the tread 2 of the tyre 1. In this case the force device 5₃ changing the complex properties of the vehicle suspension comprises a coherent annular membrane spring 5₃₁ with an appropriately adjusted characteristic and with the flexible attachment 5₃₂ to the wheel rim 4 and/or with absorption as well. Rigidity and/or also absorption in this spring changes a time behavior of the force transmitted through the tyre between a road and a vehicle with a proper ratio of rigidity change between the radial and lateral direction, which can be asymmetric.

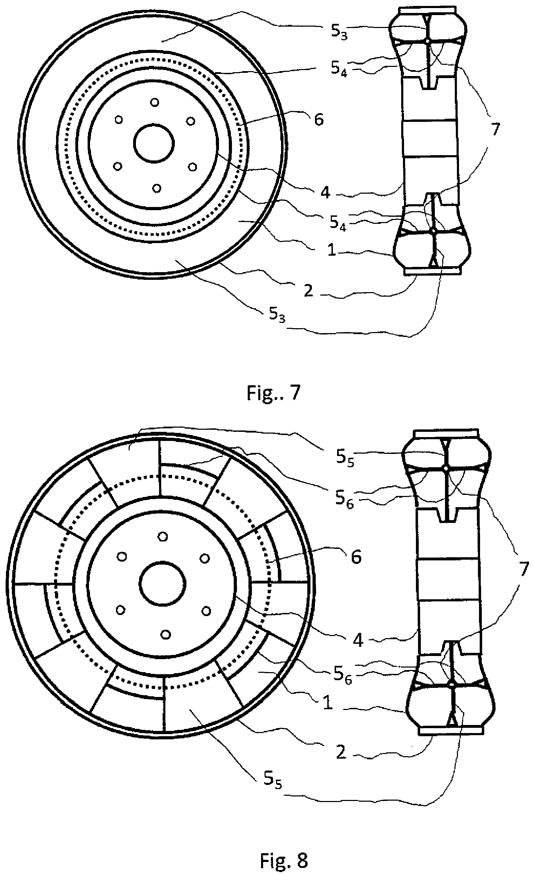

In Fig. 7 there is a depiction of a variant of the embodiment of a tyre with adjustable properties depicted in Fig 4. Instead of a set of the force devices 5₁ and 5₂ there are coherent force devices 5₃ and 5₄ of a type of a coherent annular membrane spring with possible absorbing elements or a coherent controlled absorber or a coherent controlled force actuator. These are two combined views in cross-sections, where there is a vehicle wheel consisting of the tyre 1 on the wheel rim 4. This traditional arrangement is complemented with an arrangement of the force device 5₃ comprising a mechanical element arranged coherently in the annulus 6 between the wheel rim 4 and the tread 2 of the tyre 1 and with the force device 5₄ of a type of a coherent annular membrane spring with possible absorbing elements or a coherent controlled absorber or a coherent controlled force actuator arranged coherently in the annulus between the wheel rim 4 and side-walls 3 of the tyre 1. The force devices 5₃ and 5₄ are arranged spokewise in the annulus 6 on the coherent spherical joint 7 towards the tread 2 and the both side-walls 3 of the tyre 1. In this case the force devices 5₃ and 5₄ comprise controlled absorbers with an appropriately adjusted characteristic which changes the complex properties of the vehicle suspension and transverse dynamics. Absorption in these absorbers changes a time behavior of the force transmitted through the tyre between the vehicle and a road. Though, the force device 5₃ and 5₄ can comprise other types of devices which change the force transmission directly between the tread 2 and indirectly between the side-walls 3 and subsequently the tread 2 of the tyre, which is in contact with a road, and the wheel rim 4 which transmits the force to the vehicle chassis. This can be a combination of a spring and an controlled absorber or an element with controlled properties. An example can be a set of absorbers with controlled absorbing properties. The control can be realized through magnetic field acting on magnetorheological fluid filled in the controlled absorber, or directly by electrical control voltage acting on the controlled actuator. The control method can be similar to the control of the suspension and transverse dynamics of the vehicle chassis, for example understeering or oversteering. This is another controlled element in such a system.

In Fig. 8 there is a depiction of a variant of the embodiment of the tyre with adjustable properties depicted in Fig 7. Instead of the coherent force devices 5₃ and 5₄ of a type of a coherent annular membrane spring with possible absorbing elements or a coherent controlled absorber or a coherent controlled force actuator there are force devices 5₅ and 5₆ of a type of a split annular membrane spring with possible absorbing elements. A split annular membrane spring means that the annular membrane spring comprising the force devices 5₅ and 5₆ is not arranged on the annulus 6 coherently, but it forms individual separated sectors. These are two combined views in cross-sections, where there is a vehicle wheel consisting of the tyre 1 on the wheel rim 4. This traditional arrangement is complemented with an arrangement of the force device 5₅ comprising a mechanical element arranged sectionally in the annulus 6 between the wheel rim 4 and the tread 2 of the tyre 1 and with the force device 5₆ of a type of a split annular membrane spring with possible absorbing elements arranged sectionally in the annulus between the wheel rim 4 and side-walls 3 of the tyre 1. Preferably the arrangements of the force devices 5₅ and 5₆ on the annulus 6 are alternating. The force devices 5₅ and 5₆ are arranged spokewise in the annulus 6 on the spherical joint 7 for the connection with the tread 2 and the both side-walls 3 of the tyre 1. In this case the force devices 5₅ and 5₆ comprise controlled absorbers with an appropriately adjusted characteristic which changes the complex properties of the vehicle suspension and transverse dynamics. Absorption in these absorbers changes a time behavior of the force transmitted through the tyre between the vehicle and a road. Though, the force device 5₅ and 5₆ can comprise other types of devices which change the force transmission directly between the tread 2 and indirectly between the side-walls 3 and subsequently the tread 2 of the tyre, which is in contact with a road, and the wheel rim 4 which transmits the force to the vehicle chassis. This can be a combination of a spring and an controlled absorber or an element with controlled properties. An example can be split annular absorbers with controlled absorbing properties. The control can be realized through magnetic field acting on magnetorheological fluid filled in the controlled absorber, or directly by electrical control voltage acting on the controlled actuator. The control method can be similar to the control of the suspension and transverse dynamics of the vehicle chassis, for example understeering or oversteering. This is another controlled element in such a system.

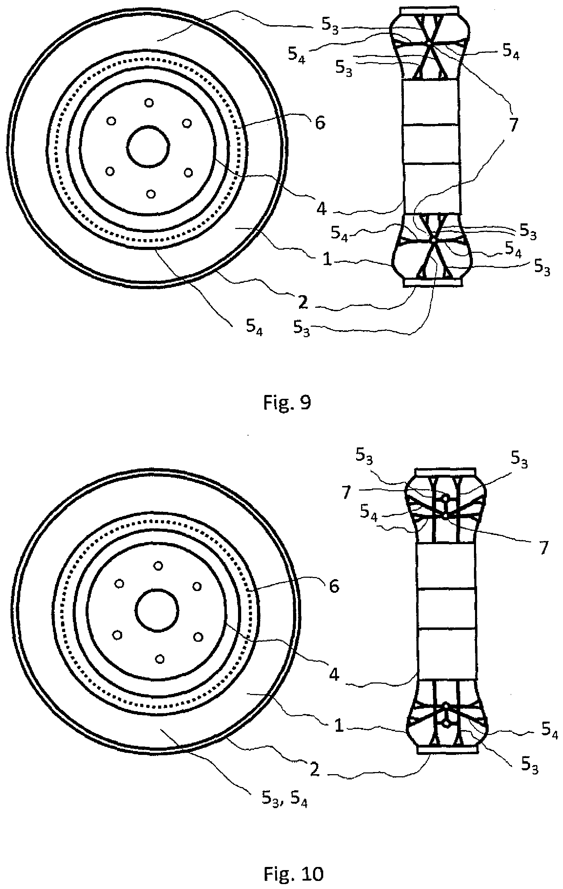

In Fig. 9 there is a depiction of a variant of the embodiment of the tyre with adjustable properties depicted in Fig 7. Again there are coherent force devices 5₃ and 5₄ of a type of a coherent annular membrane spring with possible absorbing elements or a coherent controlled absorber or a coherent controlled force actuator. Compared to the arrangement in Fig. 7 the force devices 5₃ are branched. These are two combined views in cross-sections, where there is a vehicle wheel consisting of the tyre 1 on the wheel rim 4. This traditional arrangement is complemented with an arrangement of the force devices 5₃ comprising mechanical elements arranged coherently in the annulus 6 between the wheel rim 4 and the tread 2 of the tyre 1 and with the force devices 5₄ of a type of a coherent annular membrane spring with possible absorbing elements or a coherent controlled absorber or a coherent controlled force actuator arranged coherently in the annulus between the wheel rim 4 and side-walls 3 of the tyre 1. The force devices 5₃ and 5₄ are arranged spokewise in the annulus 6 on the coherent spherical joint 7 towards the tread 2 and the both side-walls 3 of the tyre 1. In this case the force devices 5₃ and 5₄ comprise controlled absorbers with an appropriately adjusted characteristic which changes the complex properties of the vehicle suspension and transverse dynamics. Absorption in these absorbers changes a time behavior of the force transmitted through the tyre between the vehicle and a road similarly as depicted in Fig 7.

In Fig. 10 there is a depiction of a variant of the embodiment of the tyre with adjustable properties depicted in Fig 9. Force devices 5₃ and 5₄ of a type of a coherent annular membrane spring with possible absorbing elements or a coherent controlled absorber or a coherent controlled force actuator are more branched here in comparison with the arrangement depicted in Fig. 9. The force devices 5₄ are arranged spokewise around one of the spherical joints 7 and the force devices 5₃ are connected to the other spherical joint 7.

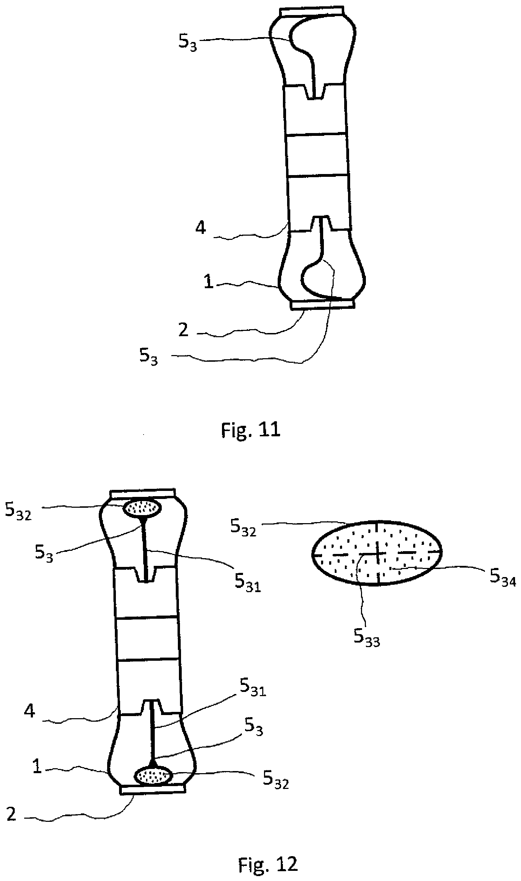

In Fig. 11 there is a depiction of a variant of the embodiment of the tyre with adjustable properties depicted in Fig 6. This is a cross-section view, where there is a vehicle wheel consisting of the tyre 1 on the wheel rim 4. This traditional arrangement is complemented with the force device 5₃ comprising a mechanical element arranged coherently in an annulus between the wheel rim 4 and the tread 2 of the tyre 1. In this case the force device 5₃ comprises a coherent annular membrane spring with an appropriately adjusted characteristic which changes the complex properties of the vehicle suspension. The annular membrane spring 5₃ has an asymmetrically curved shape which allows easy creating of an asymmetrical characteristic of the force device 5₃ rigidity. Rigidity in this spring changes a time behavior of the force transmitted through the tyre between a road and a vehicle with a proper ratio of rigidity change between the radial and lateral direction, which can even be asymmetric.

In Fig. 12 there is a depiction of another variant of the embodiment of the tyre with adjustable properties depicted in Fig 6. This is a cross-section view, where there is a vehicle wheel consisting of the tyre 1 on the wheel rim 4. This traditional arrangement is complemented with the force device 5₃ comprising a mechanical element arranged coherently in an annulus between the wheel rim 4 and the tread 2 of the tyre 1. In this case the force device 5₃ comprises a coherent annular membrane spring 5₃₁ with absorption with an appropriately adjusted characteristic which changes the complex properties of the vehicle suspension. The annular membrane spring 5₃₁ is in connection with the tread 2 of the tyre 1 through the absorbing part 5₃₂. The absorbing part 5₃₂ comprises a space filled with hydraulic oil 5₃₄ for the most part and divided by permeable dividers 5₃₃ to individual parts between which the hydraulic fluid is forced through when the tread 2 is moving towards the wheel rim 4. Thus the absorption occurs. Rigidity and absorption in this force device 5₃ changes a time behavior of the force transmitted through the tyre between a road and a vehicle with a proper ratio of a change of rigidity and absorption between the radial and lateral direction, which can even be asymmetric. The solution depicted in Fig. 12 is a passive one. The absorbing part 5₃₂ connected to the tread 2 of the tyre 1 can be filled with magnetorheological fluid and controlled from outside with the help of the control electromagnets 8 as shown in Fig. 5.

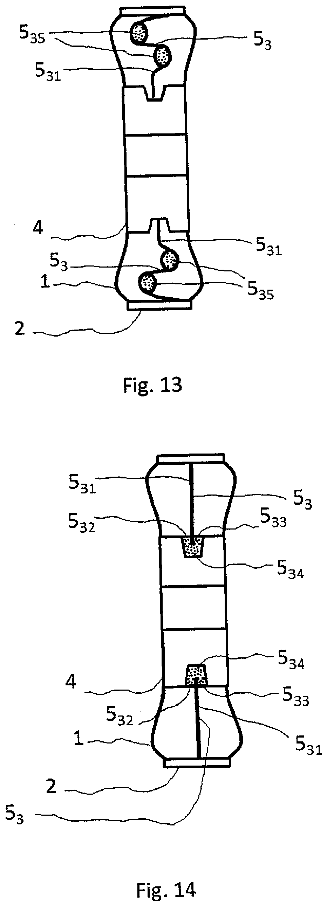

In Fig. 13 there is a depiction of a different variant of the embodiment of the tyre with adjustable properties depicted in Fig 6. This is a cross-section view, where there is a vehicle wheel consisting of the tyre 1 on the wheel rim 4. This traditional arrangement is complemented with the force device 5₃ comprising a mechanical element arranged coherently in an annulus between the wheel rim 4 and the tread 2 of the tyre 1. In this case the force device 5₃ comprises a coherent annular membrane spring 5₃₁ which has an asymmetrically curved shape in order to achieve an appropriately adjusted characteristic. In curves of the annular membrane spring there are thermally deformable parts 5₃₅ inserted which change flexibly absorbing properties of the force device 5₃ according to temperature. Rigidity and possibly absorption in this force device 5₃ changes a time behavior of the force transmitted through the tyre 1 between a road and a vehicle with a proper ratio of the rigidity change between the radial and lateral direction, which can be even asymmetric. The parts 5₃₅ of the force device 5₃ can be also filled with hydraulic oil in order to achieve passive absorption or with magnetorheological fluid in order to achieve absorption controlled from outside with the help of control electromagnets 8 as shown in Fig. 5.

In Fig. 14 there is a depiction of an alternative variant of the embodiment of the tyre with adjustable properties depicted in Fig 12. This is a cross-section view, where there is a vehicle wheel consisting of the tyre 1 on the wheel rim 4. This traditional arrangement is complemented with the force device 5₃ comprising a mechanical element arranged coherently in an annulus between the wheel rim 4 and the tread 2 of the tyre 1. In this case the force device 5₃ comprises a coherent annular membrane spring 5₃₁ with absorption with an appropriately adjusted characteristic which changes the complex properties of the vehicle suspension. Absorption is not on the side of the connection of the force device 5₃ to the tread 2, but on the side of the connection of the force device 5₃ to the wheel rim 4 through the absorbing part 5₃₂. The absorbing part 5₃₂ comprises a space filled with hydraulic oil 5₃₄ for the most part and divided by permeable dividers 5₃₃ to individual parts between which the hydraulic fluid is forced through when the tread 2 is moving towards the wheel rim 4. Thus the absorption occurs. Rigidity and absorption in this force device 5₃ changes a time behavior of the force transmitted through the tyre 1 between a road and a vehicle with a proper ratio of a change of rigidity and absorption between the radial and lateral direction, which can be asymmetric. The solution depicted in Fig. 14 is a passive one. The absorbing part 5₃₂ connected to the wheel rim 4 can be filled with magnetorheological fluid and controlled from outside with the help of the control electromagnets 8 as shown in Fig. 5.

In the figures hereof the absorber can comprise a controlled absorber with controlled adjustable properties and/or a force element the power of which (damping or actuating) is controlled and a coherent mechanical element can comprise a coherent annular membrane spring or a coherent annular controlled absorber with controlled adjustable properties or a coherent annular force element the power of which (damping or actuating) is controlled.

In the following three figures a possible method for mounting the tyre 1 with the force device 5₁ - 5₆ onto the wheel rim 4 is shown.

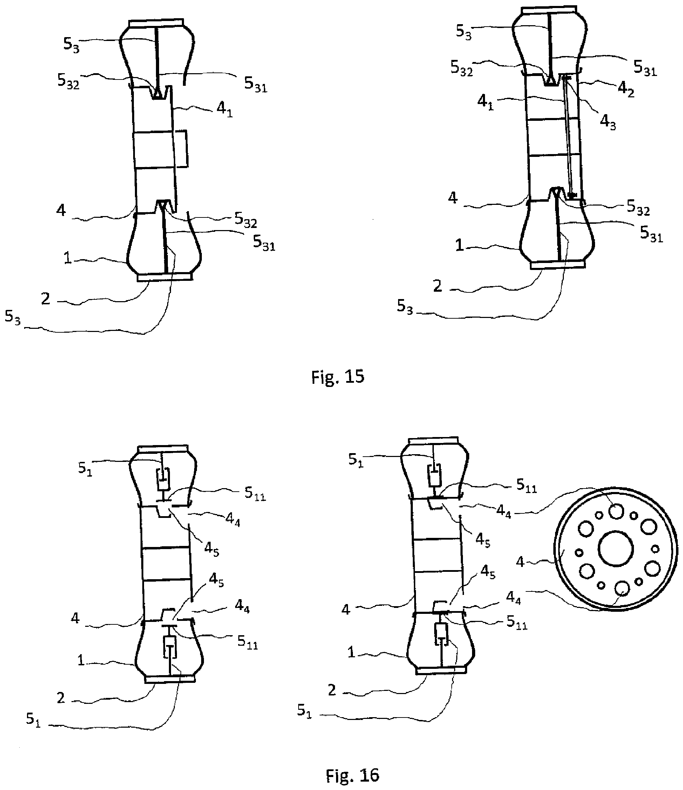

In Fig. 15 there is a depiction of the embodiment of the tyre with adjustable properties depicted in Fig. 6, where assembly is carried out with the help of the wheel rim 4 split to two parts, a basic part 4₁ and an additional part 4₂ connected by a flange 4₃ with bolts. This is a cross-section view, where there is a vehicle wheel consisting of the tyre 1 on the wheel rim 4. In Fig. 15 there is the force device 5₃ depicted comprising a mechanical element arranged coherently in an annulus between the wheel rim 4 and the tread 2 of the tyre 1.
The mounting is carried out this way: in the first phase the tyre 1 is mounted on the basic part 4₁ of the wheel rim 4 as depicted in figure on the left. In the second phase, the force device 5₃ is put through the opening originated after dismounting the additional part 4₂ of the wheel rim 4 and attached to the groove in the basic part of the rim 4₁; the force device 5₃ comprises the coherent annular membrane spring 5₃₁ and its flexible and absorbing attachment by means of the part 5₃₂ to the basic part 4₁ of the wheel rim. In the third phase the additional part 4₂ of the wheel rim is mounted-on and both parts are connected by bolts with the flange 4₃ as depicted in figure on the right. Finally the tyre is inflated. In the coherent annular membrane spring 5₃ there are holes for compressed air to go through the inner spaces of the tyre 1 separated by this coherent annular membrane spring 5₃.

In Fig. 16 there is a depiction of the embodiment of the tyre with adjustable properties depicted in Fig. 1, where assembly of the tyre 1 with the force device 5₁ is carried out with the help of side holes 4₄ and circumferential holes 4₅ in the wheel rim 4. These are two combined views in cross-sections in the figure on the right, where there is a vehicle wheel consisting of the tyre 1 on the wheel rim 4.
The mounting is carried out this way: in the first phase shown in the figure on the left the tyre 1 with multiple force devices 5₁ attached to the tread 2 of the tyre 1 is mounted onto the basic part of the wheel rim 4. The force devices 5₁ get fitted into the groove of the wheel rim 4 as necessary. In the second phase shown in the figure on the right, through the side holes 4₄ and the circumferential holes 4₅ of the wheel rim 4 the force devices 5₁ are gradually placed spokewise with their inner parts 5₁₁ towards the wheel rim 4 and then the rim 4 is sealed. Subsequently, the tyre is inflated.

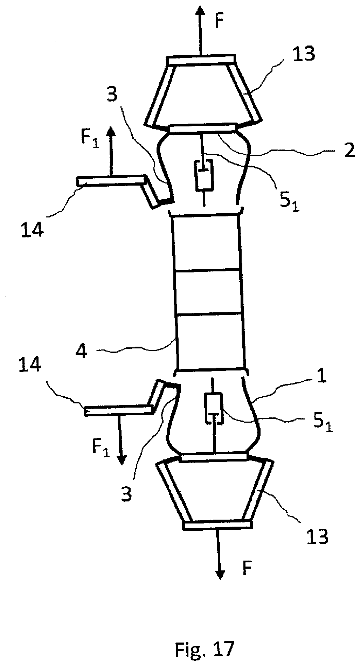

In Fig. 17 there is a depiction of the embodiment of the tyre with adjustable properties depicted in Fig. 1, where assembly is carried out with the help of mounting flanges 13. This is a cross-section view, where there is a vehicle wheel consisting of the tyre 1 on the wheel rim 4. This traditional arrangement is complemented with an arrangement of a set of force devices 5₁ between the wheel rim 4 and the tread 2 of the tyre 1. The force devices 5₁ are arranged spokewise in the annulus 6.
The mounting is carried out this way: in the first phase the tyre 1 with force elements 5₁ is attached by the tread 2 to the mounting flange 13 and is expanded in one direction by acting of forces F. In the second phase the tyre 1 deformed in this way is mounted onto the wheel rim 4 together with the force devices 5₁. In this mounting phase it is further possible to use auxiliary mounting flanges 14 and to deform also the side-wall 3 of the tyre 1 in the radial way with the help of forces F₁ in order to facilitate the assembly when fitting the tyre side-wall 3 over the edge of the wheel rim 4. The formed opening can be also used for handling the force devices 5₁ inside the tyre 1 in order to fit them in place on the wheel rim 4. Follow-up is the mounting in other direction F, until the assembly is carried out in all directions. In the third phase the forces F, possibly F₁, are released and the force devices 5₁ and the tyre 1 get fitted in their place and attached to the wheel rim 4. Subsequently, the mounting flange 13, in case of need the auxiliary mounting flange 14, is removed and the tyre is inflated.

From the described above it is evident that the assembly of the tyre with adjustable properties is more difficult than that of the traditional tyre, but such a wheel brings-in a lot of advantages not achievable either at all or not with one tyre without a change.

The above described embodiments of the tyre with adjustable inner whole-space characteristic can be used for a lot of various improvements of vehicle dynamics. This is a tyre with a structured inner dynamics which can be adjustable by adaptation or control. It is possible to create a vehicle tyre with inner absorption for functions based on a ground hook, a tyre with compensation of a lateral force in order to improve directional characteristics of wheels, it is possible to compensate variable external conditions as temperature, rotational speed, road surface (highways, urban areas, off-road terrain), weather, season of the year. Vehicle tyre properties can vary according to a position during a maneuver, for example whether this is an outer or inner wheel on the vehicle trajectory etc. With the help of the force devices 5₁ - 5₆ it is possible to adjust and even to control vehicle chassis vibration shapes, e.g. to replace torsion stabilizers, hydraulic connections of tyre absorption according to a kind of vehicle maneuvers etc.

The force devices 5₁ - 5₆ can be made of various materials and their combinations, e.g. polymers, shape-memory metals, bimetals, thermally expandable materials, magnetorheological fluids, etc. The force devices 5₁ - 5₆ can comprise controlled actuators as well.

Various combinations of the above described force devices can be used for the pneumatic tyre with adjustable properties.

## Claims

1. A pneumatic tyre with adjustable properties, especially for motor vehicles, comprising a wheel rim *and a tyre consisting of a tread and tyre side-walls, characterized between the rim (4) and the tread (2)* and/or the side-walls (3) of the tyre (1) there is/there are a controlled force device/force devices of a type of a controlled absorber or a controlled force actuator for a change of force transmission between the rim and the tyre, formed individually or in combination with force devices (5₁ - 5₆) of controlled absorber or a controlled force actuator.

2. A pneumatic tyre with adjustable properties, as described in Claim 1, **characterized in that** the force devices (5₁) of a type of a controlled absorber or a controlled force actuator between a wheel rim and a tyre tread are in spokewise. arrangement.

3. A pneumatic tyre with adjustable properties, as described in Claim 1, **characterized in that** the force devices (5₁) of a type of a controlled absorber or a controlled force actuator between the wheel rim (4) and the tyre tread (2) comprises a coherent annular controlled absorber or a coherent annular controlled force actuator.

4. A pneumatic tyre with adjustable properties, as described in Claim 1, **characterized in that** the force devices (5₂) between the side-walls (3) of the tyre (1) are connected by means of spherical joints (7) on an annulus (6).

5. A pneumatic tyre with adjustable properties, as described in Claim 1, **characterized in that** the force devices (5₁) and the force devices (5₂) are connected by means of the spherical joints (7) on the annulus (6).

6. A pneumatic tyre with adjustable properties, as described in Claim 1, **characterized in that** the one force device (5₃) is arranged together with the other force devices (5₄) between the wheel rim (4) and the tyre, whereas the force devices (5₄) are is connected to the force device (5₃) by means of the spherical joints (7).

7. A pneumatic tyre with adjustable properties, as described in Claim 6, **characterized in that** the force devices (5s) and the force devices (5₆) form individual separated sectors.

8. A pneumatic tyre with adjustable properties, as described in Claim 6, **characterized in that** at least three of the force devices (5₃) and (5₄) are arranged between the wheel rim (4) and the tread (2) by means of the spherical joints (7).

9. A tyre with adjustable properties, as described in some of the Claims mentioned above, **characterized in that** the force devices (5₁) comprising absorbers filled with magnetorheological fluid and the rim (4) is connected to the wheel body (11) fitted with control electromagnets (8).

10. A pneumatic tyre with adjustable properties, as described in some of the Claims mentioned above, **characterized in that** the rim (4) is split and fitted with a connecting flange (4₃).

11. A pneumatic tyre with adjustable properties, as described in some of the Claims mentioned above, **characterized in that** the rim (4) is fitted with side holes (4₄) and circumferential holes (4₅).

## Patentansprüche

1. Reifen mit anpassbaren eingeschaften, besonders für Kraftfahrzeugen, bestehend aus der Radfelge und dem Radreifen gebildet durch den Protektor und die Schultern, **gekennzeichnet dadurch, daß** zwischen der Radfelge (4) und dem Protektor (2) und/oder Schultern (3) des Radreifen (1) ist/sind eine/die Kraftanlage/en untergebracht in einer Form von gesteuertem Dämpfer oder gesteuerten Kraftaktuator für die Änderung der Kraftübertragung zwischen der Radfelge und der Radreifen, gebildet einzeln oder in der Kombination von individuellen Kraftanlagen (5₁ bis 5₆) aus den gesteuerten Dämpfern oder gesteuerten Kraft-Aktuatoren.

2. Reifen mit anpassbaren eingeschaften nach dem Patentanspruch 1, **gekennzeichnet dadurch, daß** die Kraftanlagen (5₁) den Typen ein gesteuerter Dämpfer oder gesteuerter Kraftaktuator, zwischen der Radfelge (4) und dem Protektor (2) der Reifen strahlenförmig zueinander angeordnet sind.

3. Reifen mit anpassbaren eingeschaften nach dem Patentanspruch 1, **gekennzeichnet dadurch, daß** die Kraftanlagen (5₁) den Typen ein gesteuerter Dämpfer oder gesteuerter Kraftaktuator, zwischen der Radfelge (4) und dem Protektor (2) der Reifen sind mit dem kontinuierlichen strahlenförmigen gesteuerten Dämpfer oder mit dem kontinuierlichen strahlenförmigen gesteuerten Kraftaktuator gebildet.

4. Reifen mit anpassbaren eingeschaften nach dem Patentanspruch 1, **gekennzeichnet dadurch, daß** die Kraftanlagen (5₂) zwischen der Radfelge (4) und Schultern (3) des Radreifen (1) mit Hilfe der Kugelgelenke (7) auf dem Ring (6) verbunden sind.

5. Reifen mit anpassbaren eingeschaften nach dem Patentanspruch 1, **gekennzeichnet dadurch, daß** die Kraftanlagen (5₁) und die Kraftanlagen (5₂) zwischen der Radfelge (4) und dem Radreifen mit Hilfe der Kugelgelenke (7) auf dem Ring (6) verbunden sind.

6. Reifen mit anpassbaren eingeschaften nach dem Patentanspruch 1, **gekennzeichnet dadurch, daß** die Kraftanlage (5₃) zusammen mit der Kraftanlage (5₄) zwischen der Radfelge (4) und der Radreifen angeordnet ist, weil die Kraftanlage (5₄) mit der Kraftanlage (5₃) mit Hilfe von Kugelgelenken (7) verbunden sind.

7. Reifen mit anpassbaren eingeschaften nach dem Patentanspruch 6, **gekennzeichnet dadurch, daß** die Kraftanlage (5₅) und die damit verbundene Kraftanlage (5₆) in separaten Sektoren angeordnet sind.

8. Reifen mit anpassbaren eingeschaften nach dem Patentanspruch 6, **gekennzeichnet dadurch, daß** mit Hilfe der Kugelgelenke (7) zwischen der Radfelge (4) und dem Protektor (2) mindestens drei aus der Kraftanlagen (5₃) und (5₄) angeordnet sind.

9. Reifen mit anpassbaren eingeschaften nach einem aus den vorherigen Patentansprüchen, **gekennzeichnet dadurch, daß** die Kraftanlagen (5₁) beinhalten den Dämpfern gefühlten mit einer magnetorheologischen Flüssigkeit und der Radfelge (4) mit einem Träger (11) versehenen mit Steuermagneten (8) verbunden ist.

10. Reifen mit anpassbaren eingeschaften nach einem aus den vorherigen Patentansprüchen, **gekennzeichnet dadurch, daß** der Radfelge (4) geteilt und versehen mit eine Verbindungflansche (4₃) ist.

11. Reifen mit anpassbaren eingeschaften nach einem aus den vorherigen Patentansprüchen, **gekennzeichnet dadurch, daß** der Radfelge (4) mit Seitenbohrungen (4₄) und Umfangsbohrungen (4₅) versehen ist.

## Revendications

1. Pneu a caractéristiques adaptables, en particulier pour des véhicules automobiles, constituée d'une jante de la roue et d'un pneu constitué d'une bande de roulement et des flancs d'un pneu, **caractérisée en ce qu'**entre la jante de la roue (4) et la bande de roulement (2) et/ou les flancs (3) du pneu (1), il y a un(des) dispositif(s) de puissance sous la forme d'un amortisseur commandé ou d'un actionneur de puissance commandé pour faire varier la transmission de la force entre la jante et le pneu, formés individuellement ou en combinaison avec des dispositifs de puissance individuels (5₁ à 5₆) des amortisseurs commandés ou des actionneurs de puissance commandés.

2. Pneu a caractéristiques adaptables, selon la revendication 1, **caractérisée en ce que** les dispositifs de puissance (5₁) du type d'amortisseur commandé ou d'actionneur de puissance commandé, situés entre la jante de la roue (4) et la bande de roulement (2) du pneu, sont disposés radialement.

3. Pneu a caractéristiques adaptables, selon la revendication 1, **caractérisée en ce que** les dispositifs de puissance (5₁) du type d'amortisseur commandé ou d'actionneur de puissance commandé situés entre la jante de la roue (4) et la bande de roulement (2) du pneu consistent en un amortisseur annulaire continu commandé ou en un actionneur de puissance annulaire continu commandé.

4. Pneu a caractéristiques adaptables, selon la revendication 1, **caractérisée en ce que** les dispositifs de puissance (5₂) entre la jante (4) de la roue et les flancs (3) du pneu (1) sont reliés au moyen de joints sphériques (7) sur la bague (6).

5. Pneu a caracteristiques adaptables, selon la revendication 1, **caractérisée en ce que** les dispositifs de puissance (5₁) et les dispositifs de puissance (5₂) entre la jante (4) et le pneu sont reliés au moyen de joints sphériques (7) sur la bague (6).

6. Pneu a caractéristiques adaptables, selon la revendication 1, **caractérisée en ce que** le dispositif de puissance (5₃) est disposé, ensemble avec le dispositif de puissance (5₄), entre la jante de la roue (4) et le pneu, les dispositifs de puissance (5₄) étant reliés au dispositif de puissance (5₃) au moyen de joints sphériques (7).

7. Pneu a caractéristiques adaptables, selon la revendication 6, **caractérisée en ce que** le dispositif de puissance (5₅) et le dispositif de puissance y associé (5₆) sont disposés dans des secteurs séparés.

8. Pneu a caractéristiques adaptables, selon la revendication 6, **caractérisée en ce qu'**au moyen de joints sphériques (7), il y a au moins trois de dispositifs de puissance (5₃) et (5₄) disposés entre la jante de la roue (4) et la bande de roulement (2).

9. Pneu a caractéristiques adaptables, selon l'une des revendications précédentes, **caractérisée en ce que** les dispositifs de puissance (5₁) comprennent des amortisseurs remplis de fluide magnétorhéologique et que la jante de la roue (4) est reliée à un support (11) muni d'électroaimants de commande (8).

10. Pneu a caractéristiques adaptables, selon l'une des revendications précédentes, **caractérisée en ce que** la jante de la roue (4) est fendue et pourvue d'un rebord de liaison (4₃).

11. Pneu a caractéristiques adaptables, selon l'une des revendications précédentes, **caractérisée en ce que** la jante de la roue (4) est pourvue de trous latéraux (4₄) et de trous périphériques (4₅).
